(19) Europäisches Patentamt
European Patent Office
Office européen des brevets

(11) EP 4 488 229 A1

(12) **EUROPEAN PATENT APPLICATION**
published in accordance with Art. 153(4) EPC

(43) Date of publication:
**08.01.2025 Bulletin 2025/02**

(21) Application number: **23759601.0**

(22) Date of filing: **31.01.2023**

(51) International Patent Classification (IPC):
***C01B 32/28*** *(2017.01)* ***B82Y 30/00*** *(2011.01)*
***B82Y 40/00*** *(2011.01)*

(52) Cooperative Patent Classification (CPC):
**B82Y 30/00; B82Y 40/00; C01B 32/28**

(86) International application number:
**PCT/JP2023/003034**

(87) International publication number:
**WO 2023/162595 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022028954**

(71) Applicants:
- **Daicel Corporation**
  **Osaka-shi, Osaka 530-0011 (JP)**
- **Kyoto University**
  **Kyoto-shi, Kyoto 606-8501 (JP)**

(72) Inventors:
- **NISHIKAWA, Masahiro**
  **Tokyo 108-8230 (JP)**
- **KOMATSU, Naoki**
  **Kyoto-shi, Kyoto 606-8501 (JP)**

(74) Representative: **Grünecker Patent- und Rechtsanwälte**
**PartG mbB**
**Leopoldstraße 4**
**80802 München (DE)**

# (54) SURFACE-MODIFIED MICROPARTICLES AND METHOD FOR PRODUCING SAME

(57) Provided are fine particles having, as a surface modification group, a polyglycerol chain with a carboxy group introduced thereto, where the carboxy group is not easily removed by hydrolysis. The surface-modified fine particles of the present disclosure contain fine particles and a surface modification group bonded to a surface of the fine particles, wherein the surface modification group has a structure in which at least one of $CH_2OH$ groups of a (poly)glycerol chain is replaced by a carboxy group. The surface modification group is, for example, a group having a (poly)glycerol chain, and a group represented by Formula (1) and bonded to the chain and/or a group represented by Formula (2) and bonded to the chain.

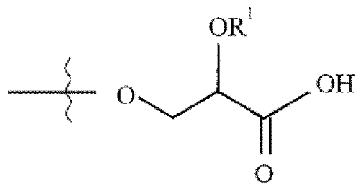
(1)

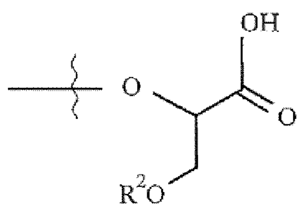
(2)



Processed by Luminess, 75001 PARIS (FR)

## Description

### Technical Field

The present disclosure relates to novel surface-modified fine particles and a method for producing the novel surface-modified fine particles. The present disclosure claims priority from JP 2022-028954 filed in Japan on February 28, 2022, the contents of which are incorporated herein by reference.

### Background Art

In fine particles, such as nanodiamond, van der Waals force and Coulomb force may cause a phenomenon called agglutination. This makes it very difficult to create a state in which fine particles, such as nanodiamond, are highly dispersed in a solvent.
A method of imparting dispersibility to the surface of fine particles is known to impart a polyglycerol group to the surface of fine particles. It is also known that addition of another modification group to the end of the polyglycerol group can impart dispersibility and desired properties to fine particles.
For example, Non-Patent Literature 1 describes that, though nanodiamond having a polyglycerol group itself does not have reactivity with an amino acid, the nanodiamond in which a carboxy group is introduced to an end of the polyglycerol group can react with a basic amino acid (e.g., such as lysine) having an opposite charge, and this can be utilized for labeling, tracking, quantification, and the like of biomolecules.
Non-Patent Literature 1 also describes a method for introducing a carboxy group to a polyglycerol group on the surface of nanodiamond, in which succinic anhydride is reacted with nanodiamond having a polyglycerol group.

### Citation List

### Non-Patent Literature

Non-Patent Literature 1: Yajuan Zou et al., Quantitative investigation of the interaction between proteins and charged functional groups on the polyglycerol-grafted nanodiamond surface, Carbon 163 (2020), p395-401.

### Summary of Invention

### Technical Problem

According to the above method, a hydroxyl group (-OH group) of the polyglycerol group is replaced by a -O(C=O) $CH_2CH_2COOH$ group.
The carboxy group formed by the above method is bonded to the polyglycerol group via an ester bond and thus is easily removed by hydrolysis. Thus, it was found that administration of nanodiamond having a carboxy group bonded via an ester bond into a living body significantly reduces the accuracy of labeling, tracking, or quantification of biomolecules due to the effect of an ester hydrolase or the like.
Thus, an object of the present disclosure is to provide fine particles having, as a surface modification group, a polyglycerol chain with a carboxy group introduced thereto, where this carboxy group is not easily removed by hydrolysis.
Another object of the present disclosure is to provide a method for producing fine particles having, as a surface modification group, a polyglycerol chain with a carboxy group introduced thereto, where this carboxy group is not easily removed by hydrolysis.

### Solution to Problem

As a result of diligent studies to solve the above issue, the present inventors have found that radical oxidation of fine particles having a group containing a polyglycerol chain provides surface-modified fine particles having a structure in which a carboxy group is bonded without an ester bond, and that the surface-modified fine particles thus produced have a carboxy group with excellent hydrolysis resistance. The present disclosure has been completed based on these findings.
That is, the present disclosure provides surface-modified fine particles containing:

fine particles and
a surface modification group bonded to a surface of the fine particles,
in which the surface modification group has a structure in which at least one of $CH_2OH$ groups of a (poly)glycerol chain is replaced by a carboxy group.

The present disclosure also provides the fine particles, in which the surface modification group is a group having:

a (poly)glycerol chain and
a group represented by Formula (1) and bonded to the (poly)glycerol chain and/or
a group represented by Formula (2) and bonded to the (poly)glycerol chain:

[Chem. 1]

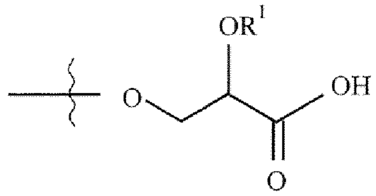

(1)

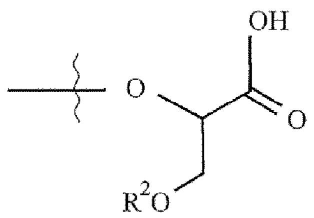

(2)

where $R^1$ and $R^2$ are identical or different and represent a hydrogen atom or a (poly)glycerol group, at least one of $CH_2OH$ groups of the (poly)glycerol group may be replaced by a carboxy group, and the bond with the wavy line is bonded to the (poly)glycerol chain.

The present disclosure also provides the surface-modified fine particles, in which the fine particles are nanodiamond.

The present disclosure also provides a method for producing surface-modified fine particles, in which the surface-modified fine particles are produced through:

(1) subjecting fine particles to ring-opening polymerization of glycidol to produce fine particles having a group containing a (poly)glycerol chain; and
(2) oxidizing, with an N-oxoammonium ion, at least one of $CH_2OH$ groups of the (poly)glycerol chain of the fine particles having a group containing the (poly)glycerol chain.

The present disclosure also provides the method for producing surface-modified fine particles, in which in (2), at least one of $CH_2OH$ groups of the (poly)glycerol chain is oxidized with an N-oxoammonium ion and a hypochlorite salt or a chlorite salt.

Advantageous Effects of Invention

The surface-modified fine particles of the present disclosure have a surface modification group with a structure in which a carboxy group is bonded to a (poly)glycerol chain without an ester bond. Thus, the surface-modified fine particles have excellent dispersibility and excellent hydrolysis resistance and have excellent reactivity with various compounds.

The surface-modified fine particles have the above properties in combination and thus are suitably used for labeling, tracking, quantification, or the like of various compounds having reactivity with a carboxy group.

Brief Description of Drawings

FIG. 1 is a diagram showing a $^{13}C$-NMR measurement result of ND-PG produced in an example.
FIG. 2 is a diagram showing a $^{1}H$-NMR measurement result of ND-PG-COOH produced in an example.
FIG. 3 is a diagram showing a $^{13}C$-NMR measurement result of ND-PG-COOH produced in an example.

Description of Embodiments

Surface-Modified Fine Particles

Surface-modified fine particles of the present disclosure contain:

fine particles and
a group having a structure in which at least one of $CH_2OH$ groups of a (poly)glycerol chain (i.e., glycerol or a polyglycerol chain) is replaced by a carboxy group (which may be hereinafter referred to as a "carboxylated (poly) glycerol group") as a surface modification group bonded to a surface of the fine particles.

The $CH_2OH$ group of the (poly)glycerol chain is a $CH_2OH$ group present at a chain end of the (poly)glycerol chain (e.g., an end of the (poly)glycerol chain). In the (poly)glycerol chain, usually, a plurality of $CH_2OH$ groups is present.

The number of repetition of the glycerol unit of the polyglycerol chain is, for example, 20 or less (e.g., more than 0 and 20 or less), preferably 15 or less, and particularly preferably 10 or less. The lower limit of the number of repetition of the glycerol unit is preferably 1 and particularly preferably 2.

The (poly)glycerol chain is a polymer having a constituent unit represented by $[C_3H_6O_2]$, and the degree of polymerization of the constituent unit is, for example, 20 or less (e.g., greater than 0 and 20 or less), preferably 15 or less, and particularly preferably 10 or less. The lower limit of the degree of polymerization is preferably 1 and particularly preferably 2.

The polyglycerol chain includes linear chain-type, branched chain-type, and dendrimer-type polyglycerol chains.

The carboxylated (poly)glycerol group has, for example, the (poly)glycerol chain and at least one group of a group represented by Formula (1) below bonded to the (poly)glycerol chain (preferably bonded to a chain end of the (poly) glycerol chain) or a group represented by Formula (2) below bonded to the (poly)glycerol chain (preferably bonded to a chain end of the (poly)glycerol chain).

[Chem. 2]

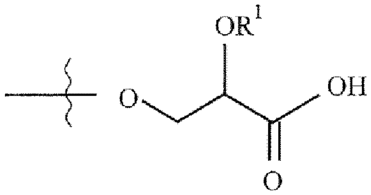

(1)

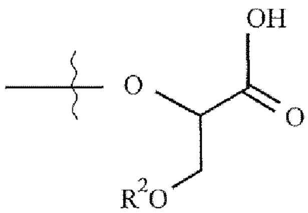

(2)

In the above formulas, $R^1$ and $R^2$ are identical or different and represent a hydrogen atom or a (poly)glycerol group. At least one of $CH_2OH$ groups of the (poly)glycerol group in the above $R^1$ and/or $R^2$ may be replaced by a carboxy group. Note that the bond with the wavy line is bonded to the (poly)glycerol chain, and the (poly)glycerol chain is bonded to the surface of the fine particles.

The $CH_2OH$ group of the (poly)glycerol group is a $CH_2OH$ group present at an end portion of the (poly)glycerol group (e.g., an end of the (poly)glycerol group). In the (poly)glycerol group, usually, a plurality of $CH_2OH$ groups is present.

The carboxylated (poly)glycerol group is bonded to a surface of the fine particles. In the bonding, the carboxylated (poly)glycerol group can be bonded via a linking group. Examples of the linking group include divalent hydrocarbon groups, di($C_{1-5}$ alkyl)silyl groups, a carbonyl group (-CO-), an ether bond (-O-), a thioether bond (-S-), an ester bond (-COO-), an amide bond (-CONH-), a carbonate bond (-OCOO-), and groups in which a plurality of these is linked (e.g., poly(alkylene oxide) groups).

The surface-modified fine particles may have a surface modification group other than a carboxylated (poly) glycerol group and may have, for example, a group having a (poly)glycerol chain in which a $CH_2OH$ group is not replaced by a carboxy group (which may be hereinafter referred to as a "non-carboxylated (poly)glycerol group"). In addition, the group

represented by Formula (1) above or the group represented by Formula (2) above may be directly bonded to a surface of the fine particles at a portion of the bond with the wavy line in the above formulas.

A weight ratio of the surface modification group [including the carboxylated (poly)glycerol group and the non-carboxylated (poly)glycerol group] to the fine particles (the former/the latter), the surface modification group and the fine particles constituting the surface-modified fine particles, is, for example, from 0.1 to 9, preferably from 0.2 to 6, and particularly preferably from 0.25 to 4.

A total introduced amount of the carboxylated (poly)glycerol group and the non-carboxylated (poly)glycerol group is, for example, from about 0.1 to about 10 parts by weight, preferably from 0.15 to 5 parts by weight, and particularly preferably from 0.2 to 4 parts by weight per part by weight of the fine particles. That is, a total proportion of the carboxylated (poly)glycerol group and the non-carboxylated (poly)glycerol group in a total amount of the surface-modified fine particles is, for example, from 10 to 90 wt.%, preferably from 15 to 85 wt.%, and particularly preferably from 20 to 80 wt.%. Introducing the surface modification group in an amount less than the above range would tend to make it difficult to prevent aggregation of the fine particles. On the other hand, introducing the surface modification group in an amount greater than the above range would cause entanglement of the surface modification groups and thus may rather promote the aggregation of the fine particles. The weight ratio of the surface modification group to the fine particles can be determined by measuring a mass change during heat treatment using a differential thermal balance analyzer (TG-DTA) or by measuring a composition ratio by elemental analysis.

The amount of a carboxy group contained in the surface-modified fine particles can be appropriately adjusted according to the application and is, for example, from 0.1 to 10 mmol/g, preferably from 0.2 to 5 mmol/g, and particularly preferably from 0.4 to 4 mmol/g.

Examples of the fine particles include nanodiamonds, fullerene fine particles, carbon nanotubes, carbon nanohorns, graphene oxide, iron oxide fine particles, titanium oxide fine particles, boron nitride fine particles, titanium nitride fine particles, boron carbide, titanium carbide, and silicon dioxide (silica). When used for the purpose of labeling, tracking, or quantification of molecules, the fine particles are preferably a material containing carbon and/or nitrogen, such as a nanodiamond, fullerene fine particles, carbon nanotubes, carbon nanohorns, graphene oxide, boron nitride fine particles, boron carbide, and titanium carbide in terms of excellent safety and stability, and particularly preferably a carbon material, such as a nanodiamond.

The particle size D50 (median diameter) of the surface-modified fine particles is, for example, from 1 to 1000 nm, preferably from 1 to 500 nm, and particularly preferably from 1 to 100 nm.

The surface-modified fine particles exhibit a negative zeta potential in water, and the zeta potential at 25°C and a pH of 7 to 8 (i.e., a pH of 6.5 to 8.4) is, for example, from -5 mV to -50 mV, preferably from -10 mV to -45 mV, and particularly preferably from -15 mV to -40 mV.

Method for Producing Surface-Modified Fine Particles

The surface-modified fine particles can be produced through:

(1) subjecting fine particles to ring-opening polymerization of glycidol to produce fine particles having a group containing a (poly)glycerol chain; and

(2) oxidizing, with an N-oxoammonium ion, at least one of $CH_2OH$ groups of the (poly)glycerol chain of the fine particles having a group containing the (poly)glycerol chain.

Step (1)

Step (1) is a process of subjecting fine particles to ring-opening polymerization of glycidol to produce fine particles having a group containing a (poly)glycerol chain.

The particle size D50 (median diameter) of the fine particles is, for example, from 1 to 1000 nm, preferably from 1 to 500 nm, and particularly preferably from 1 to 100 nm.

The fine particles are preferably fine particles having a functional group reactive with glycidol on the surface and particularly preferably fine particles having one or two or more groups selected from $-NH_2$, -OH, -COOH, -PH(=O)OH, -SH, $-SO_3H$, $-SO_2H$, and -SiOH on the surface.

The amount of glycidol is, for example, from 0.5 to 100 parts by weight and preferably from 10 to 50 parts by weight per part by weight of the fine particles. The adjustment of the amount of glycidol can control the chain length of the (poly) glycerol group and the bond density to the surface of the fine particles.

The ring-opening polymerization reaction can be carried out, for example, by heating a mixed solution of a solvent and fine particles and successively adding glycidol to the mixed solution. The heating temperature is, for example, from 40 to 180°C, preferably from 60 to 150°C, and particularly preferably from 80 to 125°C.

For the solvent, a solvent having low reactivity with glycidol and high solubility of (poly)glycerol is preferably used.

The solvent is preferably an alcohol and particularly preferably an aliphatic alcohol. Examples of the aliphatic alcohol include aliphatic monohydric alcohols having from 2 to 4 carbons, such as ethanol, propanol, isopropyl alcohol, n-butanol, isobutyl alcohol, sec-butyl alcohol, and tert-butyl alcohol; and aliphatic polyhydric alcohols having from 2 to 4 carbons, such as ethylene glycol, propylene glycol, 1,3-propanediol, 1,3-butanediol, 1,4-butanediol, and glycerol. These can be used alone or in combination of two or more.

A catalyst may be used in the ring-opening polymerization reaction. The catalyst includes acidic catalysts and basic catalysts. Examples of the acidic catalyst include boron trifluoride etherate, acetic acid, and phosphoric acid. Examples of the basic catalyst include triethylamine, pyridine, dimethylaminopyridine, and triphenylphosphine. These can be used alone or in combination of two or more.

The ring-opening polymerization reaction can be stopped by cooling the reaction solution (e.g., by a method, such as adding water to the reaction system). The product can be purified by a known or commonly used method (e.g., such as water washing, centrifugation, or membrane filtration). This purification operation can remove the solvent, excess glycidol, a by-product (e.g., polyglycerol in a free state without binding to fine particles (which may be hereinafter referred to as "free-PG"), and the like. Fine particles having a group containing a polyglycerol chain are thus produced as an aqueous dispersion.

The proportion of the group containing a (poly)glycerol chain relative to the entire fine particles having the group containing the (poly)glycerol chain is, for example, from 10 to 90 wt.%, preferably from 15 to 85 wt.%, and particularly preferably from 20 to 80 wt.%.

A weight ratio of the group containing a (poly)glycerol chain to the fine particles (the former/the latter), the group and the fine particles constituting the fine particles having a group containing a (poly)glycerol chain, is, for example, from 0.1 to 9, preferably from 0.2 to 6, and particularly preferably from 0.25 to 4.

The fine particles having a group containing a (poly)glycerol chain exhibit a positive zeta potential in water, and the zeta potential at a pH of 7 to 8 (i.e., a pH of 6.5 to 8.4) is, for example, from 5 mV to 50 mV, preferably from 10 mV to 45 mV, and particularly preferably from 15 mV to 40 mV.

Step (2)

Step (2) is a process of oxidizing, with an N-oxoammonium ion, at least one of $CH_2OH$ groups of the (poly)glycerol chain of the fine particles having a group containing a (poly)glycerol chain.

Step (2) preferably includes:

(2-1) oxidizing, with an N-oxoammonium ion, at least one of $CH_2OH$ groups of the (poly)glycerol chain of the fine particles having a group containing the (poly)glycerol chain to convert the group into an aldehyde group or an equivalent thereof; and

(2-2) oxidizing the aldehyde group or an equivalent thereof to convert it into a carboxy group.

Step (2-1)

In step (2-1), at least one of $CH_2OH$ groups contained in the (poly)glycerol chain of the fine particles having a group containing the (poly)glycerol chain is oxidized with an N-oxoammonium ion and converted into an aldehyde group or an equivalent thereof (e.g., a - $CH(OH)_2$ group).

The N-oxoammonium ion is an activator that promotes the oxidation reaction and has an action of oxidizing the $CH_2OH$ group to convert it into an aldehyde group or an equivalent thereof.

The N-oxoammonium ion is produced, for example, by oxidizing a nitroxy radical compound with a hypochlorite salt.

The reaction of oxidizing the nitroxy radical compound with a hypochlorite salt is preferably carried out in the presence of an alkali metal bromide, such as sodium bromide, in terms of improving the reaction rate.

The amount of the alkali metal bromide is, for example, from 1 to 40 times by mole and preferably from 10 to 20 times by mole the amount of the nitroxy radical compound.

Examples of the nitroxy radical compound include compounds represented by Formulas (c-1) to (c-3) below or precursors of these compounds. These can be used alone or in combination of two or more.

[Chem. 3]

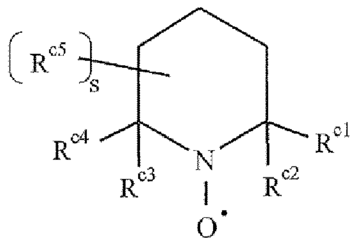

(c-1)

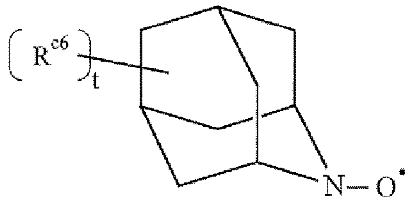

(c-2)

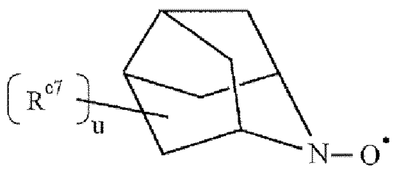

(c-3)

In Formula (c-1), $R^{c1}$ to $R^{c4}$ are identical or different and represent an alkyl group, $R^{c5}$ represents a hydroxyl group, a carboxy group, an acyl group, a substituted or unsubstituted amino group, an amide group, an alkoxy group, an aryloxy group, or an aralkyloxy group. s represents an integer of 0 to 4.

In Formula (c-2), $R^{c6}$ represents an alkyl group, a substituted or unsubstituted amino group, an amide group, a halogen atom, or a hydroxyl group. t represents an integer of 0 to 4.

In Formula (c-3), $R^{c7}$ represents an alkyl group, a halogen atom, or a hydroxyl group. u represents an integer of 0 to 4.

Examples of the alkyl group include alkyl groups having from 1 to 4 carbons, such as a methyl group and an ethyl group.

Examples of the acyl group include $C_{1-4}$ aliphatic acyl groups, such as a formyl group, an acetyl group, a propionyl group, a butyryl group, and an isobutyryl group; an acetoacetyl group; and $C_{7-14}$ aromatic acyl groups, such as a benzoyl group.

The substituted amino group includes a monosubstituted amino group and a disubstituted amino group. Examples of the substituent that the substituted amino group has include $C_{1-5}$ alkyl groups, $C_{3-6}$ cycloalkyl groups, $C_{6-10}$ aryl groups, and acyl groups. Examples of the acyl group include the same examples as those for the acyl group described above. Examples of the substituted amino group include an acetylamino group.

The amide group is a group represented by -NHCOR', where R' represents a hydrocarbon group that may have a substituent, and examples thereof include alkyl groups having from 1 to 4 carbons, haloalkyl groups having from 1 to 4 carbons, aryl groups having from 6 to 14 carbons, and aralkyl groups having from 4 to 15 carbons. The amide group includes an acetamide group and a benzamide group.

Examples of the haloalkyl group include $C_{1-4}$ haloalkyl groups, such as trufluoromethyl and trichloromethyl.

Examples of the alkoxy group include alkoxy groups having from 1 to 4 carbons, such as a methoxy group.

Examples of the aryloxy group include $C_{6-10}$ aryloxy groups, such as a phenoxy group.

Examples of the aralkyloxy group include $C_{7-16}$ aralkyloxy groups, such as a benzoyl group.

s, t, and u represent the number of groups shown in parentheses and are identical or different and integers of 0 to 4. In the case where s, t, and u are integers of 2 or more, two or more of the groups may be identical or different.

Examples of the compound represented by Formula (c-1) include 2,2,6,6-tetramethylpiperidine-1-oxyl represented by Formula (c-1-1) below, 4-hydroxy-2,2,6,6-tetramethylpiperidine-1-oxyl, 4-methoxy-2,2,6,6-tetramethylpiperidine-1-oxyl, 4-benzoyloxy-2,2,6,6-tetramethylpiperidine-1-oxyl, 4-amino-2,2,6,6-tetramethylpiperidine-1-oxyl, 4-acetamido-2,2,6,6-tetramethylpiperidine-1-oxyl, and 4-carboxy-2,2,6,6-tetramethylpiperidine-1-oxyl.

[Chem. 4]

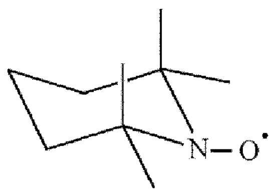

(c-1-1)

Examples of the compound represented by Formula (c-2) include 2-azaadamantane-N-oxyl represented by Formula (c-2-1) below, 1-methyl-2-azaadamantane-N-oxyl represented by Formula (c-2-2) below, 1,5-dimethyl-2-azaadamantane-N-oxyl represented by Formula (c-2-3) below, 5-amino-2-azaadamantane-N-oxyl, and 5-acetylamino-2-azaadamantane-N-oxyl.

[Chem. 5]

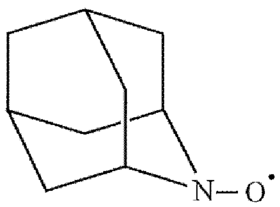

(c-2-1)

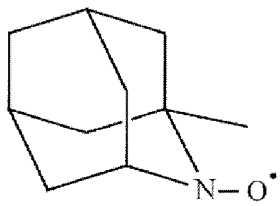

(c-2-2)

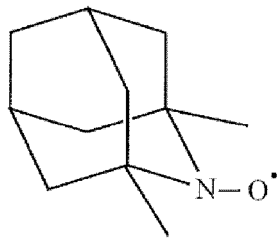

(c-2-3)

Examples of a precursor of the compound represented by Formula (c-2) include 2-hydroxy-2-azaadamantane represented by Formula (c-2-1') below.

[Chem. 6]

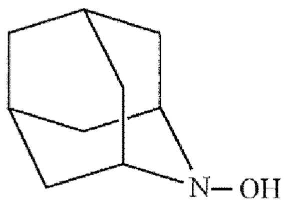

(c-2-1')

Examples of the compound represented by Formula (c-3) include 9-azanoradamantane-N-oxyl represented by Formula (c-3-1) below and 1,5-dimethyl-9-azanoradamantane-N-oxyl represented by Formula (c-3-2) below.

[Chem. 7]

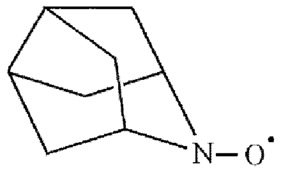

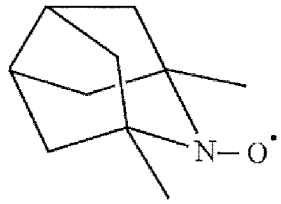

(c-3-1) (c-3-2)

The amount of hypochlorous acid is, for example, from 5 to 50 mol, preferably from 10 to 30 mol, and particularly preferably from 20 to 30 mol per mol of the nitroxy radical compound.

The nitroxy radical compound may be used as it is or may be used after being supported on a carrier.

The amount of the nitroxy radical compound is, for example, from 0.005 to 1 part by weight and preferably from 0.01 to 0.5 parts by weight per part by weight of the surface modification group of the fine particles having a (poly)glycerol group.

In addition, the N-oxoammonium ion produced by oxidizing the nitroxy radical compound oxidizes a $CH_2OH$ group of the (poly)glycerol chain, and the N-oxoammonium ion itself is reduced to N-hydroxylamine accordingly and loses its oxidizing power. N-hydroxylamine is converted again into the N-oxoammonium ion (active form) by oxidation with a co-oxidizing agent, and the N-oxoammonium ion can be reutilized in the oxidation reaction.

Examples of the co-oxidizing agent include hypochlorite salts (i.e., salts of hypochlorous acid and an alkali metal or an alkaline earth metal), such as sodium hypochlorite, potassium hypochlorite, and calcium hypochlorite; chlorite salts (i.e., salts of chlorous acid and an alkali metal or an alkaline earth metal), such as sodium chlorite, potassium chlorite, and calcium chlorite; hydrogen peroxide, t-butyl hydroperoxide, trichloroisocyanuric acid, peracetic acid, performic acid, trichloroperacetic acid, trifluoroperacetic acid, and iodobenzene diacetate.

Among these co-oxidizing agents, a hypochlorite salt, such as sodium hypochlorite, potassium hypochlorite, or calcium hypochlorite, is preferably used in terms of enabling efficient reactivation of N-hydroxylamine.

Step (2-2)

In step (2-2), the aldehyde group or an equivalent thereof formed in step (2-1) is oxidized and converted into a carboxy group.

In the reaction of step (2-2), an oxidizing agent can be used. Examples of the oxidizing agent include hypochlorite salts (i.e., salts of hypochlorous acid and an alkali metal or an alkaline earth metal), such as sodium hypochlorite, potassium hypochlorite, and calcium hypochlorite; chlorite salts (i.e., salts of chlorous acid and an alkali metal or an alkaline earth metal), such as sodium chlorite, potassium chlorite, and calcium chlorite. These can be used alone or in combination of two or more.

In the case of using a hypochlorite salt as the co-oxidizing agent in step (2-1) and using a hypochlorite salt as the oxidizing agent in step (2-2) (Case 1), a series of reactions for converting a $CH_2OH$ group contained in the (poly)glycerol group chain into a carboxy group (a $CH_2OH$ group $\rightarrow$ an aldehyde group or an equivalent thereof $\rightarrow$ a carboxy group) can be efficiently carried out in one pot.

In Case 1, the amount of the hypochlorite salt is, for example, from 5 to 50 mol, preferably from 10 to 30 mol, and particularly preferably from 20 to 30 mol per mol of an N-oxoammonium ion.

In Case 1, the pH of the reaction system is desired to be adjusted to a range where a hypochlorite salt is stably present and the oxidation capacity can be well exhibited, and is preferably adjusted, for example, to a range of pH 8 to 11.

In the case of using a hypochlorite salt as the co-oxidizing agent in step (2-1) and using a chlorite salt as the oxidizing agent in step (2-2) (Case 2), the amount of a carboxy group contained in the surface-modified fine particles can be controlled by adjusting the amount of the chlorite salt and the reaction time. For example, reducing the amount of the chlorite salt can selectively produce surface-modified fine particles carboxylated at a low proportion.

In Case 2, in the case of using a chlorite salt in step (2-2), when an aldehyde group or an equivalent thereof is oxidized and converted into a carboxy group, the chlorite salt itself is reduced to a hypochlorite salt, and the hypochlorite salt thus produced can be utilized as the co-oxidizing agent in step (2-1).

In Case 2, the amount of the hypochlorite salt is, for example, from 0.1 to 10 mol, preferably from 0.3 to 3 mol, and particularly preferably from 0.5 to 1.5 mol per mol of an N-oxoammonium ion.

In Case 2, the amount of the chlorite salt is, for example, from 3 to 100 mol, preferably from 4 to 75 mol, and particularly preferably from 5 to 50 mol per mol of an N-oxoammonium ion.

In Case 2, the ratio of the chlorite salt to the hypochlorite salt (the former/the latter; a molar ratio) is, for example, from 2 to 100, preferably from 3 to 75, and particularly preferably from 5 to 50.

In Case 2, the total amount of the hypochlorite salt and the chlorite salt is, for example, from 5 to 100 mol, preferably from 5 to 75 mol, and particularly preferably from 5 to 50 mol per mol of an N-oxoammonium ion.

In Case 2, the reaction can be carried out under mild conditions, and the pH of the reaction system is, for example, from 3 to 11 and preferably from 4 to 9.

An example of the reaction of Case 2 is shown in the following formula.

[Chem. 8]

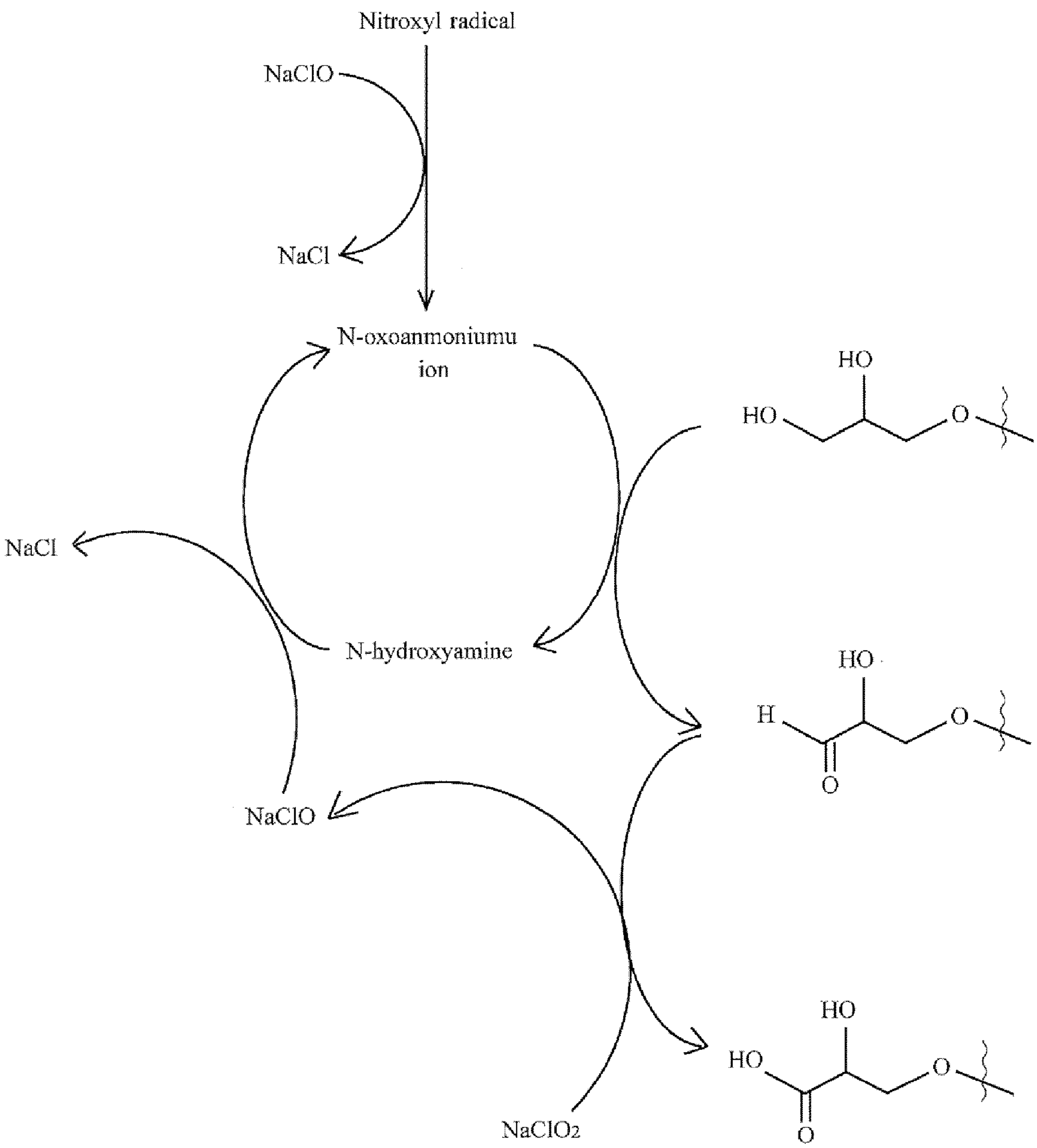


As described above, the surface-modified fine particles can be produced by a production method including:

(1) subjecting fine particles to ring-opening polymerization of glycidol to produce fine particles having a group containing a (poly)glycerol chain; and

(2') oxidizing, with an N-oxoammonium ion, the fine particles having a group containing a (poly)glycerol chain in the presence of a hypochlorite salt or a chlorite salt.

The surface-modified fine particles can also be produced by a production method including:

(1) subjecting fine particles to ring-opening polymerization of glycidol to produce fine particles having a group containing a (poly)glycerol chain; and

(2") oxidizing, with an N-oxoammonium ion, the fine particles having a group containing a (poly)glycerol chain in the presence of a hypochlorite salt and a chlorite salt.

Fine Particles

For the fine particles, for example, nanodiamond may be used, and the nanodiamond may be a commercially available product or a product produced through the following formation, acid treatment, oxidation treatment, drying, surface functional group adjustment, and disintegration/classification treatment.

Formation

First, an explosive is charged into a pressure-resistant container for detonation, the container is sealed in a state where the explosive coexists with a gas having an atmospheric composition, and the explosive is detonated in the container. For the explosive, for example, a mixture of TNT and RDX can be used.

In the detonation, the carbon released due to partial incomplete combustion of the explosive used is used as a raw material, and a nanodiamond crude product (containing aggregates of nanodiamond, soot, and oxides of metals, such as Fe, Co, and Ni, derived from the container and the like) is produced by the action of the pressure and energy of the shock wave generated by the explosion.

Acid Treatment

The acid treatment is a process of allowing a strong acid to act on the nanodiamond crude product, for example, in an aqueous solvent to remove metal oxides. Examples of the strong acid include hydrochloric acid, hydrofluoric acid, sulfuric acid, nitric acid, and mixtures of these. The acid treatment temperature is, for example, from 70 to 150°C. The duration of the acid treatment is, for example, from 0.1 to 24 hours. After the acid treatment, the solid content is preferably washed with water, for example, by decantation until the pH of the precipitation liquid reaches, for example, 2 to 3.

Oxidation Treatment

The oxidation treatment is a process of removing graphite from the nanodiamond crude product using an oxidizing agent. For the oxidizing agent, for example, a mixed acid (particularly, a weight ratio of sulfuric acid/nitric acid is, for example, from 60/40 to 95/5) can be suitably used.

The amount of the oxidizing agent (particularly, the mixed acid) is, for example, from 20 to 40 parts by weight per part by weight of the nanodiamond crude product.

In addition, in the case of using the mixed acid as the oxidizing agent, a catalyst may be used together with the mixed acid. The use of a catalyst can further improve the efficiency of graphite removal. Examples of the catalyst include copper (II) carbonate. The amount of the catalyst is, for example, from about 0.01 to about 10 parts by weight per 100 parts by weight of the nanodiamond crude product.

The oxidation treatment temperature is, for example, from 100 to 200°C. The duration of the oxidation treatment is, for example, from 1 to 24 hours.

Drying

The drying is a process of evaporating the liquid from the nanodiamond-containing solution produced through the above processes, and for example, a spray dryer, an evaporator, a drying oven, or the like can be used. Through the drying, a nanodiamond powder is produced.

Surface Functional Group Adjustment

This is a process of adjusting the surface functional group of the nanodiamond powder produced through the above processes. This process includes hydrogenation treatment and oxygen oxidation treatment. A treatment of these can be selected and carried out according to the purpose.

The hydrogenation treatment is a treatment of heating the nanodiamond powder in a hydrogen-containing gas atmosphere. The temperature conditions of the hydrogenation treatment are preferably from 400 to 800°C. In addition, the hydrogen-containing gas may be a mixed gas containing an inert gas in addition to hydrogen. Examples of the inert gas include nitrogen, argon, carbon dioxide, and helium. The hydrogen concentration in the hydrogen-containing gas is

preferably from 0.1 to 99.9 vol.%, more preferably from 0.5 to 50 vol.%, and more preferably from 1 to 10 vol.%. Carrying out the hydrogenation treatment can remove a carboxy group and/or the like present on the nanodiamond surface.

The oxygen oxidation treatment is a treatment of heating the nanodiamond powder in an oxygen-containing gas atmosphere. The oxygen oxidation treatment temperature is, for example, from 250 to 500°C. The oxygen-containing gas is a mixed gas containing an inert gas in addition to oxygen. The oxygen concentration in the mixed gas is, for example, from 1 to 35 vol.%. Carrying out the oxygen oxidation treatment can impart a functional group (e.g., such as a hydroxyl group) having reactivity with glycidol to the nanodiamond surface.

Disintegrating/Classification Treatment

When the nanodiamond produced through the above processes is in the form of aggregates (secondary particles), disintegration treatment and/or classification treatment is preferably carried out. Examples of the disintegration treatment include ultrasonication and bead milling treatment (e.g., such as bead milling treatment using zirconia beads).

The configurations and their combinations of the present disclosure described above are merely an example, and addition, omission, substitution, and modification of the configurations may be appropriately made without departing from the gist of the present disclosure. In addition, the present disclosure is not limited by the embodiments and is limited only by the claims.

Examples

The present disclosure will next be described in more detail by way of Examples, but the present disclosure is not limited to the Examples.

Example 1

Preparation of ND-PG

An ND aqueous dispersion (D50 of ND 4.5 m, trade name "Dinnovare" ζ + Nanodiamond aqueous Dispersion", available from Daicel Corporation) was concentrated under reduced pressure with an evaporator and further dried at 105°C for 2 hours. The resulting ND powder (1.0 g) was suspended in ethylene glycol (15.0 g), glycidol (45.1 g, 0.61 mol) was added dropwise over 160 minutes, and the temperature was maintained in a range of 95 to 100°C. The resulting black dispersion was stirred at the same temperature for 4 hours. Water (40 mL) was slowly added to decompose unreacted glycidol, and then the dispersion was diluted with water to 400 mL. The diluted dispersion was then concentrated to 20 mL with an ultrafiltration membrane (Ultracel Membrane, 30 kDa). The concentrate was diluted and concentrated again. This was repeated five times to wash the concentrate, furnishing a purified ND-PG as a black aqueous dispersion. The yield was 100.0 g (content of the ND-PG was 4.10 wt.%, 4.10 g).

A portion of the dispersion was dried on a heated PTFE sheet, furnishing a sample for analysis. The analysis results are shown below.

FT-IR (diffuse reflectance method, $cm^{-1}$): 3332, 2918, 2875, 1456, 1118, 1078.
$^1$H-NMR (500 MHz, $D_2O$): δ ppm 3.42, 3.50, 3.58, 3.75, 3.88.
TGA (in an air atmosphere, 20°C/min) measurements were carried out. This resulted in weight losses (%) as shown below. From this, the weight ratio of PG/ND (including free-PG impurities) can be estimated to be 3.1.
From 374 to 530°C; 72.3%
From 530 to 798°C; 23.6%

Removal of Free-PG Impurities by Ultracentrifugation

The aqueous dispersion of the ND-PG (30.0 g, solid content concentration 4.10%, net 1.23 g) was ultracentrifuged [50000 rpm (183400 x g) for 2 hours] by ultracentrifugation (HIMAC CP 70MX Ultracentrifuge). About 20 mL of the supernatant was removed, and 20 mL of water was added to the remaining lower layer to produce a uniform dispersion, and the dispersion was further ultracentrifuged under the same conditions. This operation was repeated twice.

The supernatant was removed, and water was added to the remaining lower layer. Free-PG was removed, furnishing 30.8 g of a black aqueous dispersion of the ND-PG. Of the dispersion, the pH of 15.8 g of the dispersion was adjusted to 1.93, then dilution and concentration with an ultrafiltration membrane (400 mL was concentrated to 10 mL or less) were repeated five times, furnishing 15.77 g of a black dispersion. The content of the ND-PG was 2.87 wt.% (0.45 g as solid content).

This revealed that the content of the ND-PG in 30.8 g of the black aqueous dispersion of the ND-PG was 0.88 g

and the recovery from the ND-PG aqueous dispersion before ultracentrifugation was 71.5 wt.%.

The zeta potential of the ND-PG aqueous dispersion at pH 8.1 was +18.0 mV.

A portion of the resulting black aqueous dispersion of the ND-PG was dried on a heated PTFE sheet, furnishing a sample. $^{13}C$-NMR measurement of the ND-PG was conducted using the resulting sample. The results are shown in FIG. 1.

In addition, the amount of a carboxy group in the ND-PG contained in the ND-PG aqueous dispersion (solute concentration: 2.87 wt.%) was calculated by a method described below. The result is shown in Table 1 below.

TGA (20°C/min in an air atmosphere) measurements of the ND-PG were carried out. This resulted in weight losses (%) as shown below. From this, the PG modification ratio (PG/ND weight ratio) is estimated to be 2.0.

From 360 to 528°C: 63.6%
From 528 to 613°C: 31.8%

Conversion to ND-PG-COOH by Radical Oxidation

The black aqueous dispersion of the ND-PG (15.0 g, net 0.43 g) purified by ultracentrifugation was diluted by adding 10.0 mL of water, and sodium bromide (0.61 g, 5.9 mmol) was added. Under ice-cooling, 2,2,6,6-tetramethylpiperidine-1-oxyl (24.5 mg, 0.16 mmol) was added as the nitroxy radical compound, and then a sodium hypochlorite solution (NaClO concentration 12 wt.%, effective chlorine concentration 12.9%) was gradually added.

The addition of NaClO allows oxidation reaction to proceed, and the pH decreases along with this. Thus, the reaction was allowed to proceed while the pH was maintained at about 10 to 10.5 by adding NaClO or 1 M sodium hydroxide aqueous solution. Finally, 2.5 g of an NaClO solution (net 0.30 g, 4.5 mmol, using NaClO in an amount corresponding to 28 mol per mol of the nitroxy radical compound) was added over 35 minutes.

A small amount of methanol was added to decompose residual NaClO, and then the pH was adjusted to 1.97 with 6 M hydrochloride. An operation of diluting the dispersion to 400 mL and concentrating it to 10 mL or less by filtration through an ultrafiltration membrane was repeated five times. Water was added to the concentrate, furnishing 15.0 g of a black dispersion liquid. The content of ND-PG-COOH in the dispersion liquid was 2.81 wt.% (0.42 g as solid content), and the particle size of the ND-PG-COOH (D50, in a phosphate buffered saline (pH 7.4), concentration 0.5%) was 27.9 nm.

The zeta potential of the ND-PG-COOH aqueous dispersion at pH 6.75 was -36.3 mV.

The zeta potential was measured by laser Doppler electrophoresis using an instrument (trade name "Zetasizer Nano ZS") available from Malvern Panalytical Ltd. The dispersion liquid subjected to the measurement was a liquid diluted with ultrapure water to a solid content concentration of 0.2 wt.% and then irradiated with ultrasonic waves with an ultrasonic cleaner. The zeta potential measurement temperature was 25°C.

A portion of the resulting dispersion liquid was dried on a heated PTFE sheet, furnishing a sample for analysis. The analysis results are shown below. The results are also shown in FIGS. 2 and 3.

FT-IR (diffuse reflectance method, $cm^{-1}$): 3273, 2906, 2878, 1456, 1734, 1122, 1080.
$^{1}H$-NMR (500 MHz, 0.5% NaOD): $\delta$ ppm 4.13, 3.97, 3.90, 3.58.
$^{13}C$-NMR (125 MHz, 0.5% NaOD): $\delta$ ppm 179.1, 78.9, 72.8, 63.7, 61.5, 35.1.

TGA (20°C/min in an air atmosphere) measurements of the ND-PG-COOH were carried out. This resulted in weight losses (%) as shown below. From this, the PG-COOH modification ratio (PG-COOH /ND; weight ratio) is estimated to be 1.6.

From 107 to 451°C: 60.0%
From 451 to 554°C: 38.5%

The amount of a carboxy group in the ND-PG-COOH in the ND-PG-COOH dispersion liquid (solute concentration: 2.81 wt.%) was calculated by a method described below. The result is shown in Table 1 below.

Quantification of Carboxy Group

To the sample [W (g)], 30 mL of ultrapure water was added, the mixture was magnetically stirred at room temperature. This results in a sample.

An appropriate amount of a phenolphthalein solution was added to the resulting sample, and the sample was titrated with a 0.05 mol/L KOH ethanolic solution using a burette. The endpoint of the titration was determined when the pink color of the indicator lasted for 30 seconds. One sample was titrated twice.

A blank test was carried out in the same manner except that no sample was used.

The amount of a carboxy group was calculated from the following equation.

$$\text{Amount of a carboxy group (mol/g)} = [(T^1 - T^2) \times 0.05 \times f \times 0.001]/S$$

$T^1$: Titration volume (mL) of 0.05 mol/L KOH used in the sample
$T^2$: Titration volume (mL) of 0.05 mol/L KOH used in the blank test
0.05: Molar concentration (mol/L) of the titrant
f: Titer of the titrant (f = 1.0)
0.001: For conversion to liters
S: Amount (g) of solute (amount (W) of collected sample x solute concentration in the sample)

[Table 1]

Table 1

| | W (g) | S (g) | Titration volume (mL) | | COOH amount (mmol/g) | Average COOH amount (mmol/g) |
|---|---|---|---|---|---|---|
| | | | $T^1$ | $T^2$ | | |
| Blank test | 0 | 0 | - | 0.03 | - | - |
| ND-PG | 2.1949 | 0.0630 | 0.08 | - | 0.040 | 0.04 |
| | 2.4848 | 0.0713 | 0.09 | - | 0.042 | |
| ND-PG-COOH | 1.6989 | 0.0477 | 1.30 | - | 1.330 | 1.34 |
| | 1.5458 | 0.0434 | 1.21 | - | 1.358 | |

Example 2

To a black aqueous dispersion of the ND-PG (10.0 g, net 0.20 g, PG/ND (weight ratio) = 0.9) produced in the same manner as in Example 1, a 0.4 M potassium dihydrogen phosphate buffer (pH 6.63, 10 mL) was added, and sodium chlorite ($NaClO_2$, 81%, 67.4 mg, 0.60 mmol) and 2,2,6,6-tetramethylpiperidine-1-oxyl (7.1 mg, 0.045 mmol) were added to this.
Then, a sodium hypochlorite solution (NaClO concentration 12 wt.%, effective chlorine concentration 12.9%, 32 μL, 0.058 mmol) was added, and the mixture was stirred at 50°C for 18 hours.
Methanol was added to the reaction liquid to decompose the excess oxidizing agent, and then the mixture was concentrated to 1 mL or less with a centrifugal ultrafiltration membrane (Amicon Ultra, 100 kDa). The concentrate on the membrane was diluted with water, the diluted liquid was further washed once by centrifugal filtration, and then the pH was adjusted to about 2 with hydrochloric acid. A washing operation with the centrifugal ultrafiltration membrane was performed three times, the concentrate was diluted with water, furnishing a black aqueous dispersion (20.0 g).
The content of the ND-PG-COOH in the dispersion liquid was 0.98 wt.% (0.20 g as solid content), and the content of COOH groups determined by titration was 1.00 mmol/g (relative to the solid content).

Example 3

To a black aqueous dispersion of the ND-PG (10.0 g, net 0.20 g, PG/ND (weight ratio) = 0.9) produced in the same manner as in Example 1, a 0.4 M sodium acetate buffer (pH 4.7, 10 mL) was added, and sodium chlorite ($NaClO_2$, 81%, 90.4 mg, 0.81 mmol) and 4-acetamide-2,2,6,6-tetramethylpiperidine-1-oxyl (10.3 mg, 0.048 mmol) were added to this.
Then, a sodium hypochlorite solution (NaClO concentration 12 wt.%, effective chlorine concentration 12.9%, 30 μL, 0.048 mmol) was added, and the mixture was stirred at 50°C for 24 hours.
Ethanol was added to the reaction liquid to decompose the excess oxidizing agent, and then the mixture was concentrated to 1 mL or less with a centrifugal ultrafiltration membrane (Amicon Ultra, 100 kDa). The concentrate on the membrane was diluted with water, the diluted liquid was further washed once by centrifugal filtration, and then the pH was adjusted to about 2 with hydrochloric acid. A washing operation with the centrifugal ultrafiltration membrane was performed four times, the concentrate was diluted with water, furnishing a black aqueous dispersion (20.0 g).
The content of the ND-PG-COOH in the dispersion liquid was 0.96 wt.% (0.19 g as solid content), and the content of COOH groups determined by titration was 1.52 mmol/g (relative to the solid content).

Example 4

To a black aqueous dispersion of the ND-PG (30.0 g, net 0.60 g, PG/ND (weight ratio) = 1.9) produced in the same manner as in Example 1, a 0.4 M sodium acetate buffer (pH 4.7, 30 mL) was added, and sodium chlorite ($NaClO_2$, 81%, 670.9 mg, 6.01 mmol) and 4-acetamide-2,2,6,6-tetramethylpiperidine-1-oxyl (24.9 mg, 0.117 mmol) were added to this.
Then, a sodium hypochlorite solution (NaClO concentration 12 wt.%, effective chlorine concentration 12.9%, 74 μL, 0.117 mmol) was added, and the mixture was stirred at 50°C for 48 hours.
Ethanol was added to the reaction liquid to decompose the excess oxidizing agent, then the mixture was diluted to 400 mL and concentrated to 10 mL or less with a centrifugal ultrafiltration membrane (Ultracel Membrane, 100 kDa). The concentrate on the membrane was diluted with water, the diluted liquid was further washed once by ultrafiltration, and then the pH was adjusted to about 2 with hydrochloric acid. A washing operation with the centrifugal ultrafiltration membrane was performed three times, the concentrate was diluted with water, furnishing a black aqueous dispersion (20.0 g).
The content of the ND-PG-COOH in the dispersion liquid was 2.49 wt.% (0.50 g as solid content), and the content of COOH groups determined by titration was 2.04 mmol/g (relative to the solid content).

Example 5

To a black aqueous dispersion of the ND-PG (10.0 g, net 0.20 g, PG/ND (weight ratio) = 0.9) produced in the same manner as in Example 1, a 0.4 M sodium acetate buffer (pH 4.7, 10 mL) was added, and sodium chlorite ($NaClO_2$, 81%, 33.3 mg, 0.30 mmol) and 4-acetamide-2,2,6,6-tetramethylpiperidine-1-oxyl (10.4 mg, 0.049 mmol) were added to this.
Then, a sodium hypochlorite solution (NaClO concentration 12 wt.%, effective chlorine concentration 12.9%, 30 μL, 0.048 mmol) was added, and the mixture was stirred at 50°C for 24 hours.
Ethanol was added to the reaction liquid to decompose the excess oxidizing agent, and then the mixture was concentrated to 1 mL or less with a centrifugal ultrafiltration membrane (Amicon Ultra, 100 kDa). The concentrate on the membrane was diluted with water, the diluted liquid was further washed once by centrifugal filtration, and then the pH was adjusted to about 2 with hydrochloric acid. A washing operation with the centrifugal ultrafiltration membrane was performed four times, the concentrate was diluted with water, furnishing a black aqueous dispersion (20.0 g).
The content of the ND-PG-COOH in the dispersion liquid was 0.97 wt.% (0.19 g as solid content), and the content of COOH groups determined by titration was 0.51 mmol/g (relative to the solid content).

Example 6

To a black aqueous dispersion of the ND-PG (10.0 g, net 0.20 g, PG/ND (weight ratio) = 1.9) produced in the same manner as in Example 1, a 0.4 M sodium acetate buffer (pH 4.7, 10 mL) was added, and sodium chlorite ($NaClO_2$, 81%, 224.7 mg, 1.93 mmol) and 2-hydroxy-2-azaadamantane (6.1 mg, 0.040 mmol) were added to this.
Then, a sodium hypochlorite solution (NaClO concentration 12 wt.%, effective chlorine concentration 12.9%, 37 μL, 0.060 mmol) was added, and the mixture was stirred at 50°C for 45 hours.
Ethanol was added to the reaction liquid to decompose the excess oxidizing agent, and then the mixture was concentrated to 1 mL or less with a centrifugal ultrafiltration membrane (Amicon Ultra, 100 kDa). The concentrate on the membrane was diluted with water, the diluted liquid was further washed once by centrifugal filtration, and then the pH was adjusted to about 2 with hydrochloric acid. A washing operation with the centrifugal ultrafiltration membrane was performed four times, the concentrate was diluted with water, furnishing a black aqueous dispersion (13.9 g).
The content of the ND-PG-COOH in the dispersion liquid was 1.13 wt.% (0.16 g as solid content), and the content of COOH groups determined by titration was 1.47 mmol/g (relative to the solid content).
To summarize the above, configurations and variations of the present disclosure are additionally described below.

[1] Surface-modified fine particles containing:

fine particles; and
a surface modification group bonded to a surface of the fine particles,
in which the surface modification group has a structure in which at least one of $CH_2OH$ groups of a (poly)glycerol chain is replaced by a carboxy group.

[2] The fine particles according to [1], in which the surface modification group is a group having:

a (poly)glycerol chain, and
a group represented by Formula (1) and bonded to the (poly)glycerol chain and/or

a group represented by Formula (2) and bonded to the (poly)glycerol chain.

[3] The surface-modified fine particles according to [1] or [2], in which the fine particles are nanodiamond.
[4] The surface-modified fine particles according to [1] or [2], in which the fine particles are nanodiamond, and the surface modification group is a group having:

a (poly)glycerol chain, and
a group represented by Formula (1) and bonded to the (poly)glycerol chain and/or
a group represented by Formula (2) and bonded to the (poly)glycerol chain.

[5] The surface-modified fine particles according to any one of [1] to [4], in which a weight ratio of the surface modification group to the fine particles [surface modification group/fine particles; weight ratio] is from 0.1 to 10.
[6] The surface-modified fine particles according to any one of [1] to [4], in which a weight ratio of the surface modification group to the fine particles is from 0.1 to 10.
[7] The surface-modified fine particles according to any one of [1] to [4], in which a proportion of the surface modification group in a total of the fine particles and the surface modification group is from 10 to 90 wt.%.
[8] A method for producing surface-modified fine particles, in which the surface-modified fine particles described in any one of [1] to [7] are produced through:

(1) subjecting fine particles to ring-opening polymerization of glycidol to produce fine particles having a group containing a (poly)glycerol chain; and
(2) oxidizing, with an N-oxoammonium ion, at least one of $CH_2OH$ groups of the (poly)glycerol chain of the fine particles having a group containing the (poly)glycerol chain.

[9] The method for producing surface-modified fine particles according to [8], in which in (2), at least one of $CH_2OH$ groups of the (poly)glycerol chain is oxidized with an N-oxoammonium ion and a hypochlorite salt or a chlorite salt.
[10] A method for producing surface-modified fine particles, in which the surface-modified fine particles described in any one of [1] to [7] are produced through:

(1) subjecting fine particles to ring-opening polymerization of glycidol to produce fine particles having a group containing a (poly)glycerol chain; and
(2') oxidizing, with an N-oxoammonium ion, the fine particles having a group containing a (poly)glycerol chain in the presence of a hypochlorite salt or a chlorite salt.

[11] A method for producing surface-modified fine particles, in which the surface-modified fine particles described in any one of [1] to [7] are produced through:

(1) subjecting fine particles to ring-opening polymerization of glycidol to produce fine particles having a group containing a (poly)glycerol chain; and
(2") oxidizing, with an N-oxoammonium ion, the fine particles having a group containing a (poly)glycerol chain in the presence of a hypochlorite salt and a chlorite salt.

[12] The method for producing surface-modified fine particles according to any one of [8] to [11], in which the N-oxoammonium ion is an N-oxoammonium ion produced by oxidizing a nitroxy radical compound with a hypochlorite salt.

Industrial Applicability

The surface-modified fine particles of the present disclosure have excellent dispersibility and excellent hydrolysis resistance and have excellent reactivity with various compounds. Thus, the surface-modified fine particles are suitably used for labeling, tracking, quantification, or the like of various compounds having reactivity with a carboxy group.

## Claims

**1.** Surface-modified fine particles comprising:

fine particles; and

a surface modification group bonded to a surface of the fine particles,
wherein the surface modification group includes a structure in which at least one of $CH_2OH$ groups of a (poly) glycerol chain is replaced by a carboxy group.

2. The surface-modified fine particles according to claim 1, wherein the surface modification group is a group comprising:

a (poly)glycerol chain, and
a group represented by Formula (1) and bonded to the (poly)glycerol chain and/or
a group represented by Formula (2) and bonded to the (poly)glycerol chain:

[Chem. 1]

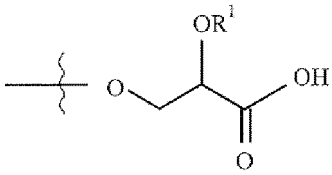

(1)

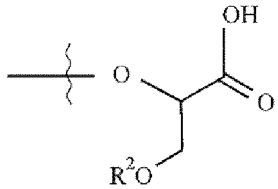

(2)

where $R^1$ and $R^2$ are identical or different and represent a hydrogen atom or a (poly)glycerol group, at least one of $CH_2OH$ groups of the (poly)glycerol group may be replaced by a carboxy group, and the bond with the wavy line is bonded to the (poly)glycerol chain.

3. The surface-modified fine particles according to claim 1 or 2, wherein the fine particles are nanodiamond.

4. A method for producing surface-modified fine particles, wherein the surface-modified fine particles described in claim 1 or 2 are produced through:

(1) subjecting fine particles to ring-opening polymerization of glycidol to produce fine particles including a group including a (poly)glycerol chain; and
(2) oxidizing, with an N-oxoammonium ion, at least one of $CH_2OH$ groups of the (poly)glycerol chain of the fine particles having a group containing the (poly)glycerol chain.

5. The method for producing surface-modified fine particles according to claim 4, wherein in (2), at least one of $CH_2OH$ groups of the (poly)glycerol chain is oxidized with an N-oxoammonium ion and a hypochlorite salt or a chlorite salt.

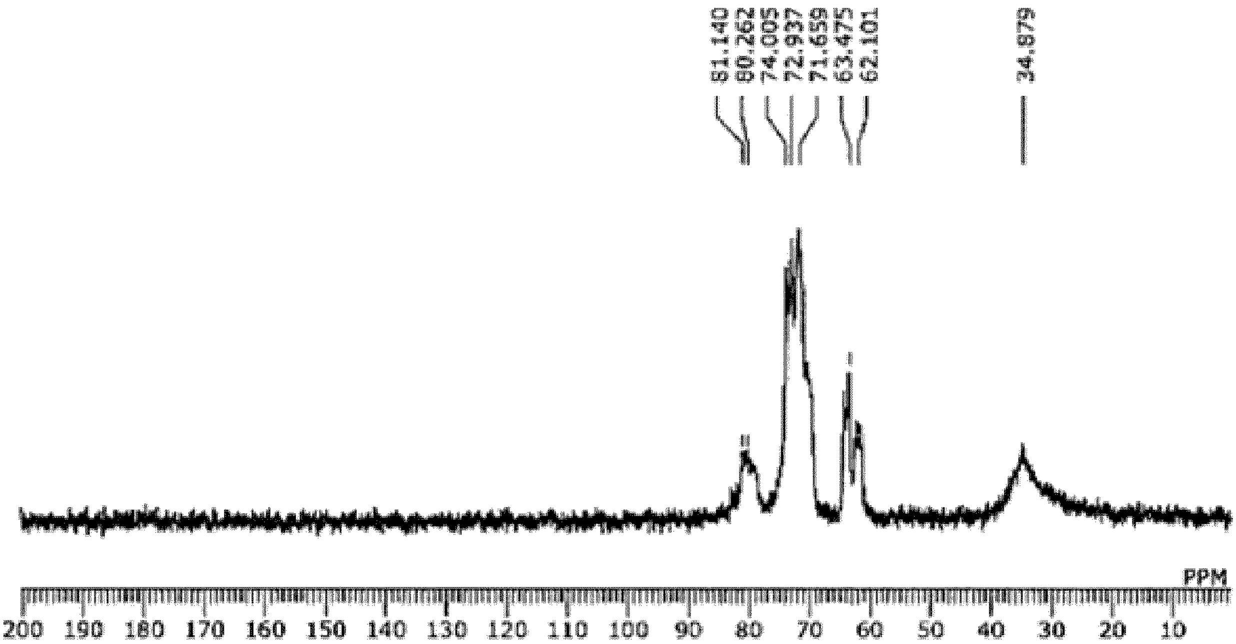
81.140
80.262
74.005
72.937
71.659
63.475
62.101
34.879
PPM
200 190 180 170 160 150 140 130 120 110 100 90 80 70 60 50 40 30 20 10

FIG. 1

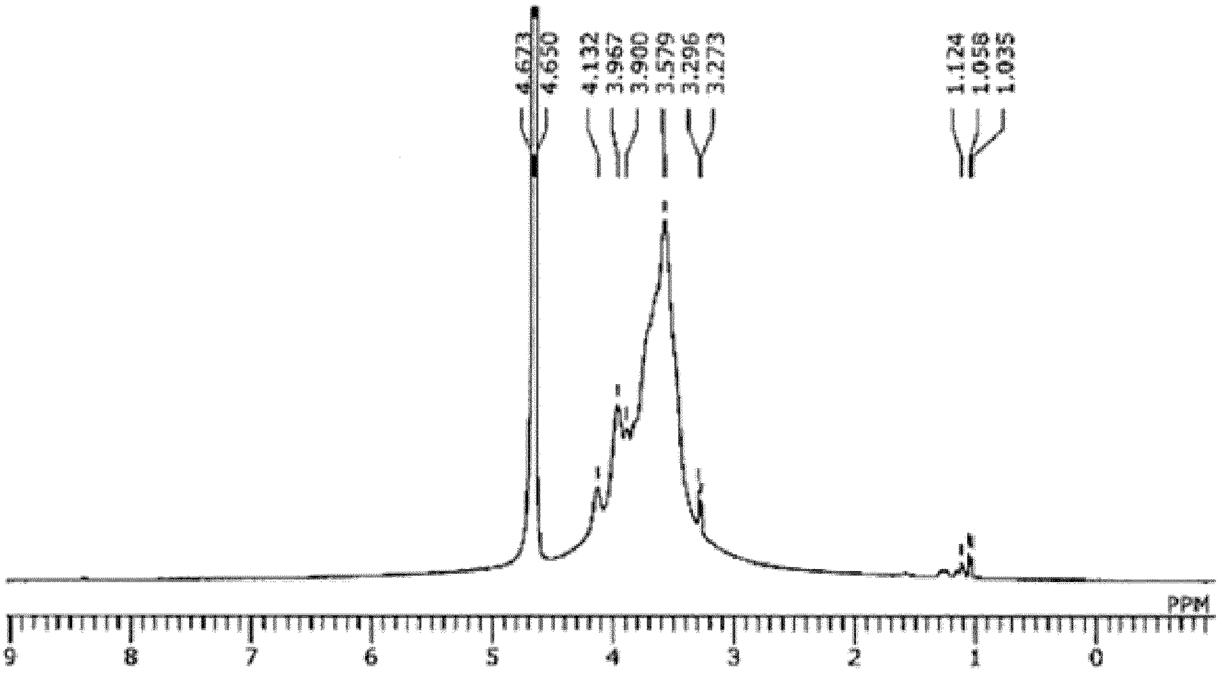
4.673
4.650
4.132
3.967
3.900
3.579
3.296
3.273
1.124
1.058
1.035
PPM
9
8
7
6
5
4
3
2
1
0

FIG. 2

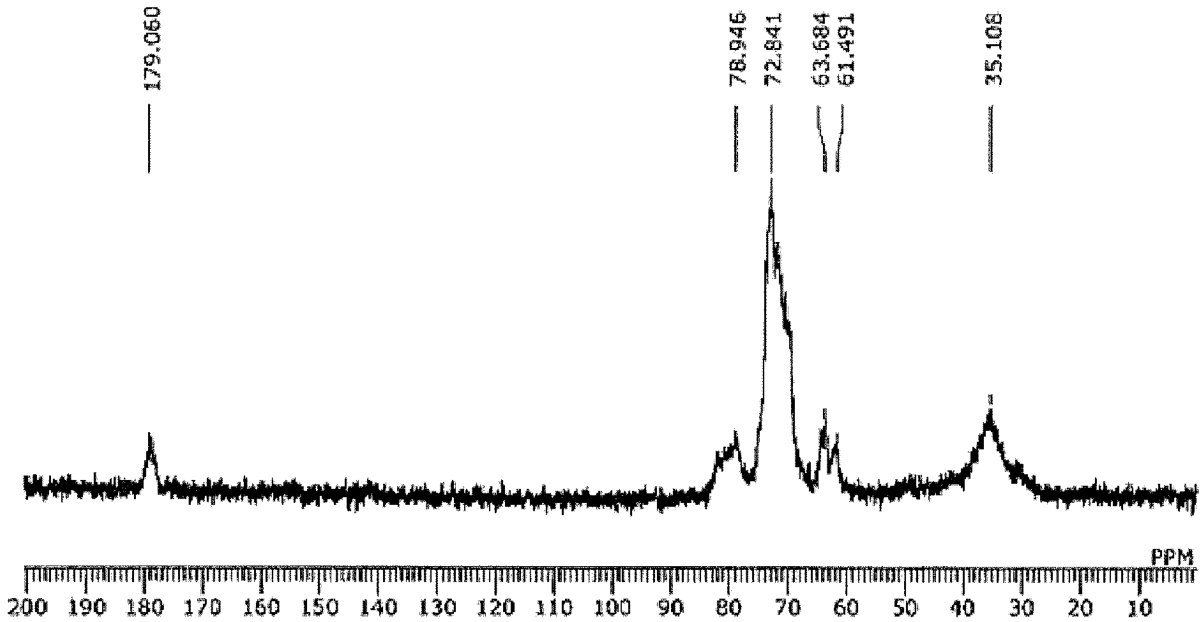
179.060
78.946
72.841
63.684
61.491
35.108
PPM
200 190 180 170 160 150 140 130 120 110 100 90 80 70 60 50 40 30 20 10

FIG. 3

## INTERNATIONAL SEARCH REPORT

International application No.
**PCT/JP2023/003034**

**A. CLASSIFICATION OF SUBJECT MATTER**

***C01B 32/28***(2017.01)i; ***B82Y 30/00***(2011.01)i; ***B82Y 40/00***(2011.01)i
FI: C01B32/28; B82Y30/00; B82Y40/00

According to International Patent Classification (IPC) or to both national classification and IPC

**B. FIELDS SEARCHED**

Minimum documentation searched (classification system followed by classification symbols)

C01B32/28; B82Y30/00; B82Y40/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2020/246500 A1 (DAICEL CORPORATION) 10 December 2020 (2020-12-10) claims 1-11, paragraphs [0037]-[0044], [0110]-[0111] | 1-5 |
| A | ACS Applied Materials & Interfaces. 13 May 2019, vol. 11, pp. 19774-19781 entire text | 1-5 |
| A | JP 2020-132447 A (DAICEL CORPORATION) 31 August 2020 (2020-08-31) claims 1-6, paragraphs [0085]-[0098] | 1-5 |
| A | WO 2020/246501 A1 (DAICEL CORPORATION) 10 December 2020 (2020-12-10) entire text, all drawings | 1-5 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/003034**

| Patent document cited in search report | Publication date (day/month/year) | Patent family member(s) | Publication date (day/month/year) |
|---|---|---|---|
| WO 2020/246500 A1 | 10 December 2020 | US 2022/0227633 A1<br>claims 1-21, paragraphs [0047]-[0058], [0113]-[0125]<br>EP 3981740 A1<br>CN 113993612 A<br>KR 10-2022-0016219 A | |
| JP 2020-132447 A | 31 August 2020 | (Family: none) | |
| WO 2020/246501 A1 | 10 December 2020 | US 2022/0263134 A1<br>entire text, all drawings<br>EP 3982446 A1<br>CN 113924678 A<br>KR 10-2022-0015470 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022028954 A


### Non-patent literature cited in the description


- **YAJUAN ZOU et al.** Quantitative investigation of the interaction between proteins and charged functional groups on the polyglycerol-grafted nanodiamond surface. *Carbon*, 2020, vol. 163, 395-401